Europäisches Patentamt

European Patent Office

Office européen des brevets

(19)

(11) Veröffentlichungsnummer: **0 042 607**
**B1**

# (12) EUROPÄISCHE PATENTSCHRIFT

(45) Veröffentlichungstag der Patentschrift:
03.10.84

(21) Anmeldenummer: 81104743.0

(22) Anmeldetag: 20.06.81

(51) Int. Cl.³: **B 62 D  49/06,** B 60 P  1/50

(54) **Abstützeinrichtung für eine von einem Traktor abgebaute Frontladeeinrichtung.**

(30) Priorität: 23.06.80  US 161841

(43) Veröffentlichungstag der Anmeldung:
30.12.81 Patentblatt 81/52

(45) Bekanntmachung des Hinweises auf die Patenterteilung:
03.10.84 Patentblatt 84/40

(84) Benannte Vertragsstaaten:
AT DE FR GB

(56) Entgegenhaltungen:
DE - A - 1 923 815
DE - A - 2 537 521
DE - A - 2 541 697

(73) Patentinhaber: DEERE & COMPANY, 1 John Deere
Road, Moline Illinois 61265 (US)

(72) Erfinder: Friesen, Henry (NMN), 3057 St. Patrick Avenue,
Niagara Falls Ontario, L2J 2M7 (CA)
Erfinder: Kizlyk, Mervin Peter, 46 Rolling Acres Drive,
Welland Ontario, L3C 3N3 (CA)

(74) Vertreter: Gramm, Werner, Prof. Dipl.-Ing.,
Patentanwälte Gramm + Lins Theodor-Heuss-Strasse 2,
D-3300 Braunschweig (DE)

## Beschreibung

Die Erfindung betrifft eine Abstützeinrichtung für eine von einem Traktor abgebaute Frontladeeinrichtung, die aus einer vorderen Schaufel besteht, die auf dem Boden aufliegt und einen Hubarm trägt, der einen sich nach oben und hinten erstreckenden vorderen Abschnitt und einen sich daran anschliessenden hochliegenden Abschnitt aufweist und von der sich im rückwärtigen Abstand von der Schaufel auf dem Boden abstützenden Abstützeinrichtung abstützend gehalten wird, wobei die Abstützeinrichtung noch folgende Merkmale aufweist:

- Ein erstes längliches Stützteil ist mit seinem oberen Ende über eine Schwenkachse so pendelnd angelenkt, dass es nach vorn bzw. nach hinten geschwenkt werden kann;
- ein zweites längliches Stützteil ist am ersten Stützteil längsverschieblich gelagert, so dass sich die Gesamtlänge beider Stützteile verändern lässt;
- eine Schiebeführung lässt zwischen den beiden Stützteilen als Relativbewegung ausschliesslich eine Längsverschiebung zu;
- eine lösbare Verriegelungseinrichtung ist zwischen den beiden Stützteilen vorgesehen, um diese entweder in einer verkürzten Stellung, in der sich das zweite Stützteil frei vom Boden befindet, oder in einer ausgezogenen Stützstellung zu verriegeln, in der das untere Ende des zweiten Stützteiles auf dem Boden aufliegt und beide Stützteile eine Stützstrebe zwischen dem Boden und dem abzustützenden Frontladerbauteil bilden.

Eine derartige Ausführungsform lässt sich der DE-A1-2 537 521 entnehmen. Die Abstützeinrichtung besteht aus einem ersten rohrförmigen Stützteil, das mit seinem oberen Ende über eine Schwenkachse an einem Gleitstück 35 angelenkt ist, das in einem angenähert horizontal angeordneten, rohrförmig ausgebildeten Arm eines Hauptrahmens längsverschiebbar geführt ist. In diesem ersten Stützteil ist ein an seinem unteren Ende eine Fussplatte aufweisendes zweites Stützteil teleskopartig längsverschieblich geführt, wobei das zweite Stützteil in seiner herausgezogenen Stellung gegenüber dem ersten Stützteil mit Hilfe einer an letzterem geführten Klemmschraube fixiert werden kann. Zur Transportstellung wird das zweite Stützteil in das erste Stützteil eingeschoben und durch Anziehen der genannten Klemmschraube fixiert. Anschliessend wird die Abstützeinrichtung nach vorn in eine angenähert horizontale Stellung verschwenkt, bis sie sich in den genannten Arm des Hauptrahmens vollständig einschieben lässt. Zur Einnahme der Stützstellung wird die Abstützeinrichtung aus dem genannten Arm des Hauptrahmens vollständig herausgezogen und dann so weit nach hinten verschwenkt, bis das erste Stützteil gegen einen am Arm des Hauptrahmens festgelegten Anschlag anschlägt, der mit einer Nase verriegelnd in eine Ausnehmung des ersten Stützteiles eingreift. Die Klemmschraube wird dann gelöst, um das zweite Stützteil so weit nach unten herauszuziehen, bis seine Fussplatte auf dem Boden aufliegt. Die Klemmschraube wird dann wieder angezogen.

Bei den üblichen Frontladeeinrichtungen sind an der Schaufel zwei Hubarme angelenkt, die mit ihren hinteren Enden am Traktor angelenkt sind und üblicherweise über Hydraulikkolben angehoben bzw. abgesenkt werden. Die Frontladeeinrichtung kann vom Traktor abgebaut werden, indem die Anlenkstellen zwischen den Hubarmen und dem Traktor sowie den Hydraulikkolben gelöst werden. Um die abgebaute Frontladeeinrichtung abstellen zu können, ist die eingangs erläuterte Abstützeinrichtung erforderlich, die die Hubarme gegenüber dem Boden abstützt.

Die vorstehend beschriebene vorbekannte Ausführungsform hat den Nachteil, dass neben den genannten Hubarmen noch rohrförmige, nach vorn offene, horizontale Arme eines Hauptrahmens vorgesehen sein müssen, in die die beiden Stützen eingeschoben werden. Die vorbekannte Abstützeinrichtung lässt sich somit nur bei solchen Konstruktionen vorsehen, bei denen derartige rohrförmige Arme des Hauptrahmens vorhanden sind.

Nachteilig bei der vorbekannten Konstruktion ist ferner, dass für die Verriegelung der Abstützeinrichtung in Abstützstellung eine zusätzliche Einrichtung vorgesehen sein muss. In Transportstellung übernimmt die die beiden Stützteile miteinander verbindende Klemmschraube keine besondere Funktion; es ist daher möglich, dass sich die Klemmschraube während der Fahrt löst und gegebenenfalls verlorengeht.

Der Erfindung liegt somit die Aufgabe zugrunde, die eingangs erläuterte Abstützeinrichtung im Aufbau zu vereinfachen und so zu gestalten, dass Einzelteile praktisch nicht verlorengehen können.

Diese Aufgabe wird gemäss der Erfindung dadurch gelöst, dass sich die zusammengeschobenen und um die am vorderen Hubarmabschnitt angeordnete Schwenkachse nach vorn geschwenkten Stützteile durch die genannte Verriegelungseinrichtung angenähert parallel zum vorderen Hubarmabschnitt an diesem in einer Transportstellung festlegen lassen, wobei die lösbare Verriegelungseinrichtung aus nur einem Verriegelungszapfen besteht, für dessen Durchtritt die beiden Stützteile mehrere Öffnungen und der vordere Hubarmabschnitt eine Bohrung aufweisen.

Die beiden länglichen Stützteile sind jeweils so lang ausgebildet, dass sie voneinander nicht getrennt und daher auch nicht verlorengehen können. Da die Abstützeinrichtung in ihrer Transportstellung dicht am vorderen Hubarmabschnitt anliegt, ist ein ausreichender lichter Abstand zu den vorderen Traktorrädern gewährleistet, so dass sich die Frontladeeinrichtung ohne Schwierigkeit am Traktor anbauen lässt. Da die Verriegelungseinrichtung sowohl zur Verriegelung der beiden Stützteile gegeneinander als auch zum Festlegen dieser Stützteile an dem vorderen Hubarmabschnitt dient, wenn diese Stützteile ihre Transportstellung einnehmen, muss die Verriegelungseinrichtung in jeder Situation verwendet werden und kann deshalb nicht verlorengehen. Die Abstützeinrichtung selbst ist ständig mit der Frontladeeinrichtung verbunden, muss also nicht separat manipuliert und verstaut werden.

Die neue Abstützeinrichtung benötigt dann besonders wenig Raum, wenn beide Stützteile einen U-förmigen Querschnitt aufweisen, der zum vorderen Hubarmabschnitt hin offen und so dimensioniert ist, dass die Stützteile in ihrer genannten Transportstellung die rückwärtige Seite des vorderen Hubarmabschnittes umgreifen.

Dabei können die Öffnungen im ersten Stützteil kurze Längsschlitze sein, um eine Justierung der beiden Stützteile zueinander zu erleichtern.

Am unteren Ende des zweiten Stützteiles kann eine Fussplatte angelenkt sein, um eine optimale Anpassung an die jeweiligen Bodenverhältnisse sicherzustellen.

Ferner ist es zweckmässig, wenn am oberen Ende des ersten Stützteiles eine die rückwärtige Verschwenkung begrenzende Anschlagfläche vorgesehen ist, die bei Abstützstellung an der Rückseite des vorderen Hubarmabschnitts anliegt.

In der Zeichnung ist eine als Beispiel dienende Ausführungsform der Erfindung dargestellt. Es zeigen:

Fig. 1 in schematischer Darstellung in Seitenansicht einen Traktor mit angebauter Frontladeeinrichtung;

Fig. 2 einen Ausschnitt aus Fig. 1 in vergrössertem Massstab mit einer sich in Abstützstellung befindlichen Abstützeinrichtung;

Fig. 3 die Darstellung gemäss Fig. 2, bei der sich die Abstützeinrichtung jedoch in Transportstellung befindet;

Fig. 4 einen Schnitt gemäss der Linie 4–4 in Fig. 3;

Fig. 5 einen Schnitt gemäss der Linie 5–5 in Fig. 2 und

Fig. 6 einen Schnitt gemäss der Linie 6–6 in Fig. 5.

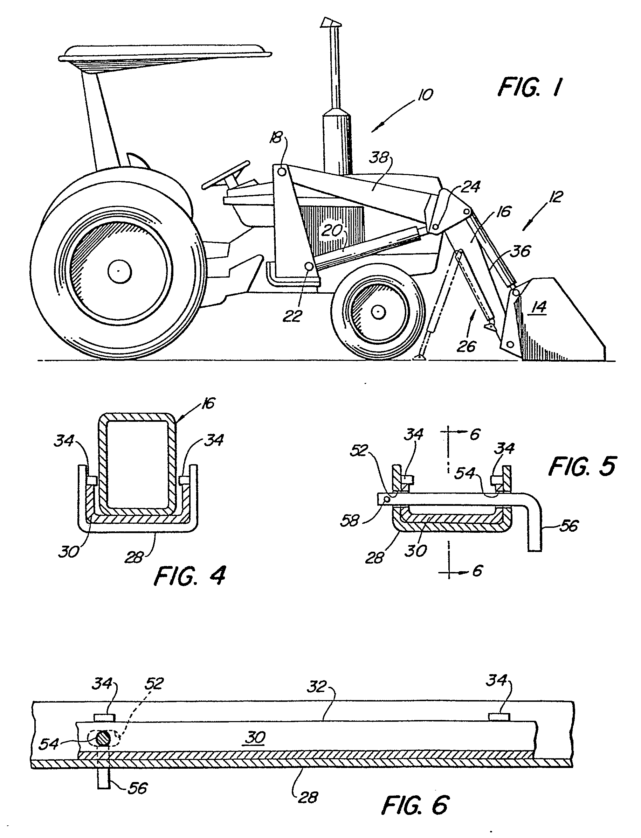

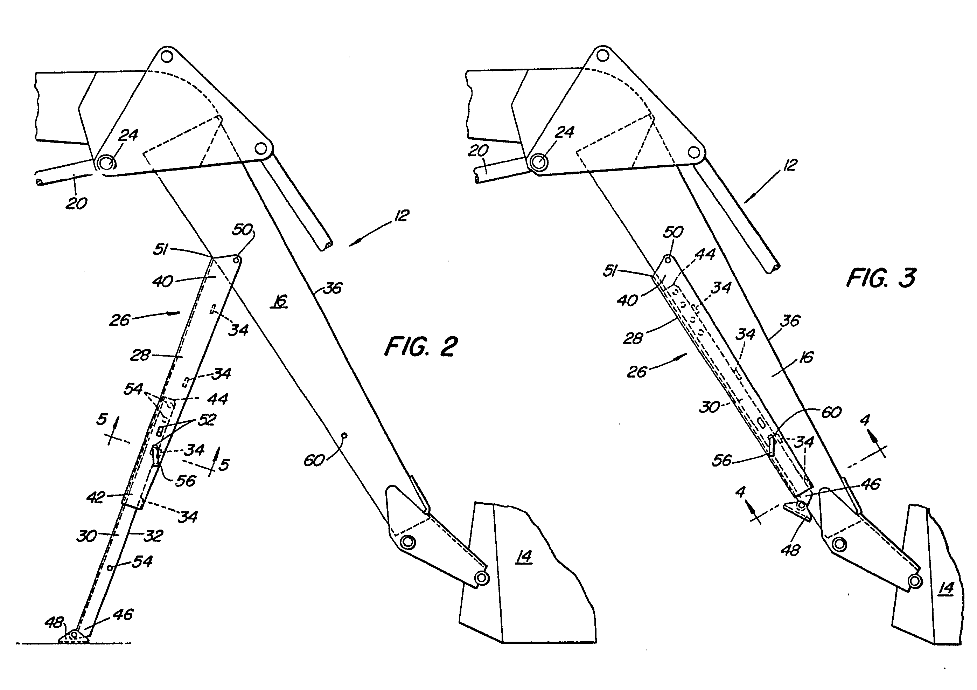

Gemäss Fig. 1 ist ein typischer Traktor 10 mit einer Frontladeeinrichtung 12 versehen, die eine Schaufel 14 aufweist, von der sich ein Paar Liftarme 16, von denen lediglich der vornliegende gezeigt ist, nach oben und hinten zum Traktor hin erstrecken und an diesem bei 18 lösbar angelenkt sind. Jeder Hubarm 16 wird über Hydraulikkolben angehoben bzw. abgesenkt, die bei 22 am Traktor und bei 24 an der Frontladeeinrichtung lösbar angelenkt sind.

Fig. 1 zeigt in ausgezogenen Linien eine sich in Transportstellung befindende Abstützeinrichtung 26, deren Abstützstellung in strichpunktierten Linien dargestellt ist. Diese Abstützeinrichtung umfasst ein erstes Stützteil 28 sowie ein zweites Stützteil 30, die beide im Querschnitt U-förmig ausgebildet sind, wobei das erste Stützteil etwas grosser dimensioniert ist, so dass das zweite Stützteil 30 in dem ersten Stützteil 28 teleskopartig längsverschieblich gelagert ist. Dabei liegen die freien Längsränder 32 der U-Schenkel des zweiten Stützteiles 30 etwas unterhalb von den entsprechenden Längsrändern der U-Schenkel des ersten Stützteiles 28. Letzteres trägt angenähert über seine gesamte Länge auf der Innenseite seiner U-Flansche im Abstand voneinander angeordnete Nasen oder Zapfen 34, die die oberen Längsränder 32 der U-Schenkel des zweiten Stützteiles 30 übergreifen und so eine Schiebeführung bilden, die als Relativbewegung zwischen den beiden Stützteilen ausschliesslich eine Längsverschiebung ermöglicht und gleichzeitig eine Trennung der beiden Stützteile voneinander nur dann ermöglicht, wenn das zweite Stützteil nahezu vollständig aus dem ersten Stützteil herausgezogen wird.

Der Hubarm 16 umfasst in üblicher Weise einen vorderen, an der Schaufel 14 befestigten Hubarmabschnitt 36, der sich nach oben und hinten erstreckt und in einen angenähert horizontal verlaufenden hochliegenden Abschnitt 38 übergeht. Das erste Stützteil hat ein oberes Ende 40 und ein unteres Ende 42, während das zweite Stützteil 30 ein oberes Ende 44 und ein unteres Ende 46 aufweist. An letzterem ist eine Fussplatte 48 angelenkt. Das obere Ende 40 des ersten Stützteils 28 ist über eine Schwenkachse 50 im oberen Bereich des vorderen Hubarmabschnitts 36 an diesem verhältnismässig dicht neben dem hochliegenden Hubarmabschnitt 38 angelenkt, so dass die Abstützeinrichtung 26 um diese Schwenkachse 50 in ihre Abstützstellung (Fig. 2) oder aber in ihre Transportstellung (Fig. 3) verschwenkt werden kann.

In Abstützstellung sind die Stützteile 28, 30 so weit auseinandergezogen, dass die Fussplatte 48 auf dem Boden aufliegt und die Abstützeinrichtung so eine Stützstrebe zwischen dem Boden und dem angehobenen Hubarm bildet. In dieser Stellung liegt das obere Ende 40 des ersten Stützteiles 28 mit einer Anschlagfläche 51 an der Rückseite des vorderen Hubarmabschnitts 36 an und begrenzt so den rückwärtigen Verschwenkweg der Abstützeinrichtung.

In den U-Schenkeln des ersten Stützteiles 28 sind paarweise miteinander fluchtende kurze Längsschlitze 52 angeordnet, während in den U-Schenkeln des zweiten Stützteiles 30 mehrere, ebenfalls paarweise miteinander fluchtende Bohrungen 54 vorgesehen sind, die mit den genannten Längsschlitzen 52 zur Deckung gebracht werden können. Zur Verriegelung der beiden Stützteile 28, 30 in ausgezogener Stellung wird ein L-förmiger Verriegelungszapfen 56 durch die miteinander fluchtenden Längsschlitze 52 bzw. Bohrungen 54 gesteckt und durch einen Splint 58 od. dgl. gesichert (Fig. 5). Im unteren Abschnitt des vorderen Hubarmabschnitts 36 ist eine Bohrung 60 vorgesehen, durch die der Verriegelungszapfen 56 gesteckt werden kann, wenn die Stützteile 28, 30 zusammengeschoben und nach vorn in ihre Transportstellung verschwenkt sind (Fig. 3). Derselbe Verriegelungszapfen 56 dient also sowohl zur Verriegelung der beiden Stützteile in ihrer zusammengeschobenen Stellung als auch zu ihrer Verriegelung am Hubarm, wobei hierfür die untersten Bohrungen 54 im zweiten Stützteil 30 Verwendung finden (siehe Fig. 2).

Fig. 4 lässt deutlich erkennen, dass die im Querschnitt U-förmig ausgebildeten Stützteile 28, 30 so angeordnet und dimensioniert sind, dass sie in ihrer Transportstellung die rückwärtige Seite des vorderen Hubarmabschnittes 36 umgreifen und dadurch besonders dicht an dem Hubarm anliegen. Dadurch werden etwaige Probleme hinsichtlich eines ausreichenden lichten Abstandes zu den Vorderrädern des Traktors beim Einsatz der Frontladeeinrichtung vermieden.

Die erfindungsgemässe Abstützeinrichtung ist in ihrem Aufbau besonders einfach und lässt sich preiswert herstellen. Die Ausbildung ist so, dass sich die Abstützeinrichtung auch an bereits vorhandenen Frontladeeinrichtungen anbringen lässt.

**Patentansprüche**

1. Abstützeinrichtung (26) für eine von einem Traktor (10) abgebaute Frontladeeinrichtung (12), die aus einer vorderen Schaufel (14) besteht, die auf dem Boden aufliegt und einen Hubarm (16) trägt, der einen sich nach oben und hinten erstreckenden vorderen Abschnitt (36) und einen sich daran anschliessenden hochliegenden Abschnitt (38) aufweist und von der sich im rückwärtigen Abstand von der Schaufel auf dem Boden abstützenden Abstützeinrichtung (26) abstützend gehalten wird, wobei die Abstützeinrichtung noch folgende Merkmale aufweist:
– Ein erstes längliches Stützteil (28) ist mit seinem oberen Ende (40) über eine Schwenkachse (50) so pendelnd angelenkt, dass es nach vorn bzw. nach hinten geschwenkt werden kann;
– ein zweites längliches Stützteil (30) ist am ersten Stützteil (28) längsverschieblich gelagert, so dass sich die Gesamtlänge beider Stützteile (28, 30) verändern lässt;
– eine Schiebeführung (32, 34) lässt zwischen den beiden Stützteilen (28, 30) als Relativbewegung ausschliesslich eine Längsverschiebung zu;
– eine lösbare Verriegelungseinrichtung (56, 58) ist zwischen den beiden Stützteilen (28, 30) vorgesehen, um diese entweder in einer verkürzten Stellung, in der sich das zweite Stützteil (30) frei vom Boden befindet, oder in einer ausgezogenen Stützstellung zu verriegeln, in der das untere Ende des zweiten Stützteiles (30) auf dem Boden aufliegt und beide Stützteile eine Stützstrebe zwischen dem Boden und dem abzustützenden Frontladerbauteil bilden,

dadurch gekennzeichnet, dass sich die zusammengeschobenen und um die am vorderen Hubarmabschnitt (36) angeordnete Schwenkachse (50) nach vorn geschwenkten Stützteile (28, 30) durch die genannte Verriegelungseinrichtung (56, 58) angenähert parallel zum vorderen Hubarmabschnitt (36) an diesem in einer Transportstellung festlegen lassen, wobei die lösbare Verriegelungseinrichtung (56, 58) aus nur einem Verriegelungszapfen (56) besteht, für dessen Durchtritt die beiden Stützteile (28, 30) mehrere Öffnungen (52, 54) und der vordere Hubarmabschnitt (36) eine Bohrung (60) aufweisen.

2. Abstützeinrichtung nach Anspruch 1, dadurch gekennzeichnet, dass beide Stützteile (28, 30) einen U-förmigen Querschnitt aufweisen, der zum vorderen Hubarmabschnitt (36) hin offen und so dimensioniert ist, dass die Stützteile in ihrer genannten Transportstellung die rückwärtige Seite des vorderen Hubarmabschnittes (36) umgreifen.

3. Abstützeinrichtung nach Anspruch 1 oder 2, dadurch gekennzeichnet, dass die genannte Schiebeführung (32, 34) aus mehreren, an dem einen Stützteil (28) sitzenden Nasen oder Zapfen (34) besteht, die sich über eine Teilbreite des anderen Stützteiles (30) erstrecken, das sich an ihnen verschiebbar abstützt.

4. Abstützeinrichtung nach Anspruch 3, dadurch gekennzeichnet, dass das zweite Stützteil (30) teleskopartig im ersten Stützteil (28) geführt ist und diesem gegenüber niedrigere U-Schenkel aufweist, deren freie Längsränder (32) von den Nasen oder Zapfen (34) übergriffen werden, die an den U-Schenkeln des ersten Stützteiles (28) sitzen.

5. Abstützeinrichtung nach Anspruch 3 oder 4, dadurch gekennzeichnet, dass die Nasen oder Zapfen (34) im Abstand voneinander über angenähert die gesamte Länge des ersten Stützteiles (28) an diesem angeordnet sind.

6. Abstützeinrichtung nach einem der vorhergehenden Ansprüche, dadurch gekennzeichnet, dass die Öffnungen (52) im ersten Stützteil (28) kurze Längsschlitze sind.

7. Abstützeinrichtung nach einem der vorhergehenden Ansprüche, dadurch gekennzeichnet, dass am unteren Ende des zweiten Stützteiles (30) eine Fussplatte (48) angelenkt ist.

8. Abstützeinrichtung nach einem der vorhergehenden Ansprüche, dadurch gekennzeichnet, dass am oberen Ende (40) des ersten Stützteiles (28) eine die rückwärtige Verschwenkung begrenzende Anschlagfläche (51) vorgesehen ist, die bei Abstützstellung an der Rückseite des vorderen Hubarmabschnittes (36) anliegt.

**Claims**

1. Parking stand means (26) for a tractor-dismounted front loader (12) having a forward bucket (14) adapted to rest on the ground and a lift arm (16) connected to the bucket and having a forward lift arm portion (36) extending upwardly and rearwardly from the bucket to an elevated portion (38), said lift arm (16) being supported by said parking stand means (26) engaging the ground and being in rearwardly spaced relation to the bucket (14), whereby said parking stand means further comprises:
– pivot means (50) connecting the upper end (40) of a first elongated member (28) for swinging of the member forwardly and rearwardly, respectively;
– a second elongated member (30) axially slidably interfitting with the first member (28) so that the combined length of the two members (28, 38) may be selectively varied;
– sliding means (32, 34) cooperative between the two members (28, 30) for confining the members against any but relative lengthwise movement;

— releasable locking means (56, 58) cooperative between the two members (28, 30) for locking the members in a shortened retracted position in which the second member (30) is clear of a ground or in a lengthened park position in which the lower end (46) of the second member (30) engages the ground and the members together provide a supporting strut between the ground and elevated element portion;

characterized in that said locking means (56, 58) are locking the shortened members (28, 30) to said forward lift arm portion (36) when said members are swung forwardly about the aforesaid pivot means (50) being located at the forward lift arm portion (36) to store the members in substantially parallelism with said arm portion in a transport position, whereby the releasable locking means (56, 58) is in the form of only one lock pin which may pass through several holes (52, 54) in both members (28, 30) and a hole (60) in the forward lift arm portion (36).

2. The parking stand means of claim 1, in which the members (28, 30) have a U-shaped cross-section opening forwardly to the forward lift arm portion (36) and so dimensioned as to receive the rearward part of said portion when said members are in their transport position.

3. The parking stand means of claim 1 or 2, in which the mentioned sliding means (32, 34) comprises a plurality of projections or lugs (34) carried by one member (28) and extending partly across the other member (30) for sliding engagement therewith.

4. The parking stand means of claim 3, in which the second member (30) fits in a telescopic manner within the first member (28) and its U-flanges are of lesser height than those of the first member, and the projections or lugs (34) are affixed to the U-flanges of the first member (28) and overlie and engage the three longitudinal edges (32) of the U-flanges of the second member.

5. The parking stand means of claims 3 or 4, in which the projections or lugs (34) are spaced apart lengthwise along the first member (28) substantially throughout the length thereof.

6. The parking stand means of one of the preceding claims, in which the mentioned holes (52) in the first member (28) are in the form of short longitudinal slots.

7. The parking stand means of one of the preceding claims, in which a ground-engaging shoe (48) is linked to the lower end of the second member (30).

8. The parking stand means of one of the preceding claims, in which a stop face at the upper end (40) of the first member (28) abuts in parking position against the rearward sufface of the forward lift arm portion (36) to prevent further rearward swinging movement.

## Revendications

1. Dispositif d'appui formant béquille (26) pour chargeuse frontale (12) après dépose à partir d'un tracteur, comportant un godet avant (14) reposant sur le sol et portant un bras de relevage (16) qui comprend une partie avant (36) s'étendant vers le haut et vers l'arrière et une partie supérieure (38) se raccordant à la précédente, et maintenue dans une condition d'appui par le dispositif formant béquille prenant appui sur le sol à une certaine distance en arrière du godet, ce dispositif d'appui formant béquille présentant encore les particularités suivantes:

— un premier élément d'appui allongé (28) est articulé de façon pendulaire par son extrémité supérieure (40), par l'intermédiaire d'un axe de pivotement (50), de telle sorte qu'il puisse pivoter ou basculer vers l'avant et vers l'arrière;

— un second élément d'appui allongé (30) est monté de façon à pouvoir coulisser longitudinalement sur le premier élément d'appui (28), de telle sorte que la longueur totale des deux éléments d'appui (28, 30) puisse être modifiée;

— un guide formant coulisse (32, 34) autorise entre les deux éléments d'appui (28, 30), comme mouvement relatif, exclusivement un coulissement longitudinal;

— un dispositif de verrouillage dégageable (56, 58) est prévu entre les deux éléments d'appui (28, 30), pour les verrouiller dans une position raccourcie dans laquelle le second élément d'appui (30) se trouve à l'écart du sol, ou dans une position sortie dans laquelle l'extrémité inférieure du second élément d'appui (30) repose sur le sol et les deux éléments d'appui constituent une béquille s'étendant entre le sol et la chargeuse frontale à supporter,

caractérisé en ce que les éléments d'appui (28, 30) rentrés l'un dans l'autre et basculés vers l'avant autour de l'axe de pivotement (50) prévu sur la partie avant (36) des bras de relevage peuvent être immobilisés par le dispositif de verrouillage précité (56, 58) sur la partie avant (36) des bras de relevage dans une position sensiblement parallèle à celle-ci en position de transport, le dispositif de verrouillage dégageable (56, 58) étant constitué simplement par une broche de verrouillage (56) pour le passage de laquelle les deux éléments d'appui (28, 30) présentent plusieurs orifices (52, 54) tandis que la partie avant (36) des bras de relevage présente un perçage (60).

2. Dispositif d'appui formant béquille suivant la revendication 1, caractérisé en ce que les deux éléments d'appui (28, 30) ont une section droite en forme d'U qui est ouverte en direction de la partie avant (36) du bras de relevage et qui est dimensionnée de façon telle que les éléments d'appui entourent, dans leur position de transport mentionnée, la face arrière de la partie avant (36) du bras de relevage.

3. Dispositif d'appui formant béquille suivant la revendication 1 ou 2, caractérisé en ce que le guide formant coulisse mentionné (32, 34) est constitué par plusieurs becs ou ergots (34) prévus sur l'un (28) des éléments d'appui, ces ergots s'étendant sur une partie de la largeur de l'autre

élément d'appui (30), qui s'appuie de façon coulissante sur lesdits ergots.

4. Dispositif d'appui formant béquille suivant la revendication 3, caractérisé en ce que le second élément d'appui (30) est guidé télescopiquement dans le premier élément d'appui (28) et comprend des branches en U de hauteur plus faible que celui-ci, les becs ou ergots (34) qui se trouvent sur les branches en U du premier élément d'appui (28) chevauchant les bords longitudinaux libres (32) des branches du second élément d'appui.

5. Dispositif d'appui formant béquille suivant la revendication 3 ou 4, caractérisé en ce que les becs ou ergots (34) sont disposés à une certaine distance l'un de l'autre sensiblement sur toute la longueur du premier élément d'appui (28).

6. Dispositif d'appui formant béquille suivant l'une quelconque des revendications précédentes, caractérisé en ce que les trous (52) prévus dans le premier élément d'appui (28) sont constitués par des fentes longitudinales de faible longueur.

7. Dispositif d'appui formant béquille suivant l'une quelconque des revendications précédentes, caractérisé en ce qu'une semelle (48) est articulée à l'extrémité inférieure du second élément d'appui (30).

8. Dispositif d'appui formant béquille suivant l'une quelconque des revendications précédentes, caractérisé en ce qu'il est prévu, à l'extrémité supérieure (40) du premier élément d'appui (28), une surface de butée (51) limitant le pivotement vers l'arrière, qui dans la position d'appui s'applique contre la face arrière de la partie avant (36) du bras de relevage.

FIG. 1

FIG. 4

FIG. 5

FIG. 6

0 042 607

FIG. 3

FIG. 2

9